# EUROPEAN PATENT SPECIFICATION

(11) **EP 2 106 416 B1**
(45) Date of publication and mention of the grant of the patent: **28.11.2012**
(21) Application number: 07862922.7
(22) Date of filing: 14.12.2007
(51) Int. Cl.: C08G 18/48, C08G 18/18, C08G 18/66, C08J 9/10

(54) **CLOSED CELL FOAMS COMPRISING URETHANE ELASTOMERS**
GESCHLOSSENZELLIGE SCHAUMSTOFFE, UMFASSEND URETHANELASTOMERE
MOUSSES À CELLULES FERMÉES COMPRENANT DES ÉLASTOMÈRES D'URÉTHANE

(30) Priority: 29.12.2006 US 877880 P
(43) Date of publication of application: 07.10.2009
(73) Proprietor: Rubberlite Incorporated, Huntington, WV 25703 (US)
(72) Inventor: SPEAS, Rick, Forest, VA 24551 (US)
(74) Representative: Hofstetter, Schurack & Partner
(86) International application number: PCT/US2007/025607
(87) International publication number: WO 2008/082474

(56) References cited:
- CA-A1- 2 036 125
- US-A- 5 236 964
- US-A- 5 252 617
- US-A- 5 919 395
- US-B1- 6 348 514
- US-B2- 6 734 220

## Description

### Field of the Invention

The invention is generally in the area of closed cell foams, and, more particularly, is in the area of closed cell foams made from urethane elastomers.

### Background of the Invention

Closed cell foam is a type of foam that has cells that are not interconnected. Closed cell foam is commonly used as a padding insulating, buoyant, shock absorbing, vibration dampening foam, and is typically an air and watertight foam. Neoprene foams are one example of a closed cell foam, and are one of the few elastomeric closed cell foams. Neoprene foams are typically used in scuba diving suits, rubber gaskets and washers, tubing, gloves, belting, die cutting, extrusions, sheets, and bearings, where the elastomeric properties are important.

Neoprene foams include neoprene, chlorine, plasticizers, sulfur and/or peroxides, as these substances are commonly used in neoprene compounding and manufacturing. Although there are disadvantages to the use of neoprene foams, due to the presence of one or more of their components, it has been difficult to provide substitutes for these foams.

CA 2036125 Al discloses a process for the production of sheetlike cellular polyurethane moldings, having a thickness of 25 mm which can have, on one or more sides, a smooth, essentially compact surface.

US 5252617 A discloses expandable polyurethane powder preparations containing blowing agents and to their use for the production of foamed polyurethane moldings.

Polyurethane foams can be made as closed cell foams, but these tend not to be elastomeric. It would be advantageous to produce elastomeric urethane closed cell foams that are not prepared from the harmful substances used to prepare neoprene foams. The present invention provides such a foam, as well as methods for producing the foam, and articles of manufacture including the foam.

### Summary of the Invention

The present invention is directed to a process for preparing a chemically blown polyurethane elastomers resulting in highly flexible closed cell foams. The closed cell polyurethane foams can be formulated to exhibit physical characteristics similar to those of neoprene foams. However, they are ideally free or substantially free (i.e., less than about 0.5% by weight of the composition) of neoprene, chlorine, plasticizers, sulfur and peroxide typically used in neoprene compounding and manufacturing. In addition, the manufacturing process does not require the use of expensive (and dangerous) banburys and roller mills and extruders.

The foams are prepared by blending a diisocyanate or polyisocyanate prepolymer, a polyol, such as a polyether polyol or polyester polyol, an amine catalyst, a chemical blowing agent, and optionally a C₂₋₁₀ diol, and allowing the compounds to cure to form a polymeric material.

The material is heated, for example by passing the material through a heating oven while on a moving web. The material is initially heated to a temperature at or above the softening temperature (or glass transition temperature) of the polymer, but below the temperature at which the blowing agent becomes activated. This step softens the polymer. Then, when the polymer is softened, the temperature is raised (for example, by passing the softened polymer through a higher temperature oven) to a temperature at which the blowing agent is activated. Thus, the blowing agent is activated while the polymer is in a softened state. As a result, the blown polymer foam includes closed cells, but has less rigidity than conventional closed cell polyurethane foams.

The foam can be used in various applications, for example, in diving suits, orthotic brace materials, die ejection materials, seals (including those for refrigerator applications), and as a shock-absorbing base for road reflectors. The closed cell polyurethane foam can be skived into thin rolls (typically 2-3mm thick) and laminated to fabrics (lycra, spandex, light weight nylons and polyesters, and the like). The resulting laminate can then be cut, sewn and finished into a final form. The choice of reactants and/or reaction conditions can easily be modified to generate closed cell foams suitable for a variety of other applications and industries, including automotive, footwear, printing, medical, apparel, and other applications.

The foam can be prepared from a variety of suitable materials, including various polyether and polyester polyols, copolymers and resins, raw MDI and MDI in the form of a prepolymer, and TDI based elastomers. A variety of blowing agents can be used, including azodicarbonamide and expandable microspheres.

In addition to the polymerizable constituents, various catalysts, activators, dispersants, dyes, pigments, fire retardants, anti-microbials, UV and gas fade stabilizers, anti-static additives, chain extenders, cross linkers, and the like can be added.

### Detailed Description

The present invention will be better understood with reference to the following detailed description. The various components used to produce the foam, the steps involved in producing the foam, the properties of the resulting foam, and articles of manufacture including the foam, are described in detail below.

### I. Urethane Components

### A. Polyurethane Composition

As mentioned, the foams described herein are polyurethane-based. Polyurethanes are the reaction product of at least one polyurethane prepolymer and a curing agent, of which the polyurethane prepolymer is a product formed by a reaction between at least one polyol and at least one diisocyanate or polyisocyanate.

As used herein, a polyol is a substance containing at least two hydroxyl (-OH) groups attached to a single molecule, and a polyisocyanate is a substance having two or more reactive (-NCO) radicals or groups attached to the main molecule.

The polyurethane-based compositions described herein are preferably saturated aromatic or aliphatic polyurethanes, and, thus, in one embodiment, the composition is the product of a reaction between at least one saturated polyurethane prepolymer, formed of at least one saturated diisocyanate and at least one saturated polyol, and at least one saturated curing agent.

Typically, a polyester and/or polyether polyol is present at a concentration of 100 phr, and a blowing agent is present at a concentration of between about 1 and about 20 phr, more typically between about 6 and about 9 phr. An activator is typically present at a concentration of between about 0.3 and about 0.45 phr. An MDI or TDI prepolymer is typically present at a concentration of between about 40 and about 60 phr. A chain extender, such as a C₂₋₁₀ diol or triol, is typically present at a concentration of between about 5 and about 7.5 phr. A catalyst, such as an amine, hydroxyl, or thiol catalyst, is typically present at a concentration of between about 0.05 and about 0.20 phr, more typically between about 0.8 and about 0.12 phr. A dye is optionally present, at a concentration of between about 0.8 and 1.2 phr, though amounts can be expected to vary depending on the desired color.

### Isocyanate Component

Examples of diisocyanates that can be used with the present invention include, but are not limited to, substituted and isomeric mixtures including 2,2'-, 2,4'-, and 4,4'-diphenylmethane diisocyanate (MDI) and toluene diisocyanate (TDI).

Saturated isocyanates for use with the polyurethane prepolymer include aliphatic, cycloaliphatic, araliphatic, derivatives thereof, and combinations of these compounds having two or more isocyanate (NCO) groups per molecule. The isocyanates may be organic, modified organic, organic polyisocyanate-terminated prepolymers, and mixtures thereof. The isocyanate-containing reactable component may also include any isocyanate-functional monomer, dimer, trimer, or multimeric adduct thereof, prepolymer, quasi-prepolymer, or mixtures thereof. Isocyanate-functional compounds may include monoisocyanates or polyisocyanates that include any isocyanate functionality of two or more. Suitable isocyanate-containing components include diisocyanates having the generic structure: O=C=N-R-N=C=O, where R is preferably a cyclic or linear or branched hydrocarbon moiety containing from about 1 to 20 carbon atoms. The diisocyanate may also contain one or more cyclic groups. When multiple cyclic groups are present, linear and/or branched hydrocarbons containing from about 1 to 10 carbon atoms can be present as spacers between the cyclic groups. In some cases, the cyclic group(s) may be substituted at the 2-, 3-, and/or 4-positions, respectively. Substituted groups may include, but are not limited to, halogens, primary, secondary, or tertiary hydrocarbon groups, or a mixture thereof.

Examples of saturated diisocyanates that can be used in the polyurethane prepolymer include, but are not limited to, ethylene diisocyanate; propylene-1,2-diisocyanate; tetramethylene diisocyanate; tetramethylene-1,4-diisocyanate; 1,6-hexamethylenediisocyanate (HDI); octamethylene diisocyanate; decamethylene diisocyanate; 2,2,4-trimethylhexamethylene diisocyanate; 2,4,4-trimethylhexamethylene diisocyanate; dodecane-1,12-diisocyanate; cyclobutane-1,3-diisocyanate; cyclohexane-1,2-diisocyanate; cyclohexane-1,3-diisocyanate; cyclohexane-1,4-diisocyanate; methyl-cyclohexylene diisocyanate (HTDI); 2,4-methylcyclohexane diisocyanate; 2,6-methylcyclohexane diisocyanate; 4,4'-dicyclohexyl diisocyanate; 2,4'-dicyclohexyl diisocyanate; 1,3,5-cyclohexane triisocyanate; isocyanatomethylcyclohexane isocyanate; 1-isocyanato-3,3,5-trimethyl-5-isocyanatomethylcyclohexane; isocyanatoethylcyclohexane isocyanate; bis(isocyanatomethyl)-cyclohexane diisocyanate; 4,4'-bis(isocyanatomethyl)dicyclohexane; 2,4'-bis(isocyanatomethyl)dicyclohexane; isophoronediisocyanate (IPDI); triisocyanate of HDI; triisocyanate of 2,2,4-trimethyl-1,6-hexane diisocyanate (TMDI); 4,4'-docyclohexylmethane diisocyanate (H₁₂MDI); 2,4-hexahydrotoluene diisocyanate; 2,6-hexahydrotoluene diisocyanate; aromatic aliphatic isocyanate, such as 1,2-, 1,3-, and 1,4-xylene diisocyanate; meta-tetramethylxylene diisocyanate (m-TMXDI); para-tetramethylxylene diisocyanate (p-TMXDI); trimerized isocyanurate of any polyisocyanate, such as isocyanurate of toluene diisocyanate, trimer of diphenylmethane diisocyanate, trimer of tetramethylxylene diisocyanate, isocyanurate of hexamethylene diisocyanate, isocyanurate of isophorone diisocyanate, and mixtures thereof; dimerized uredione of any polyisocyanate, such as uretdione of toluene diisocyanate, uretdione of hexamethylene diisocyanate, and mixtures thereof, modified polyisocyanate derived from the above isocyanates and polyisocyanates; and mixtures thereof. In one embodiment, the saturated diisocyanates include isophoronediisocyanate (IPDI), 4,4'-dicyclohexylmethane diisocyanate (H₁₂MDI), 1,6-hexamethylene diisocyanate (HDI), or a combination thereof.

The number of unreacted NCO groups in the polyurethane prepolymer may be varied to control such factors as the speed of the reaction, the resultant hardness of the composition, and the like. For instance, the number of unreacted NCO groups in the polyurethane prepolymer of isocyanate and polyol may be less than about 14 percent. In one embodiment, the polyurethane prepolymer has from about 5 percent to about 11 percent unreacted NCO groups, and even more preferably has from about 6 to about 9.5 percent unreacted NCO groups. In one embodiment, the percentage of unreacted NCO groups is about 3 percent to about 9 percent. Alternatively, the percentage of unreacted NCO groups in the polyurethane polymer may be about 7.5 percent or less, and more preferably, about 7 percent or less. In another embodiment, the unreacted NCO content is from about 2.5 percent to about 7.5 percent, and more preferably from about 4 percent to about 6.5 percent.

Unsaturated diisocyanates, i.e., aromatic compounds, may also be used with the present invention, although the use of unsaturated compounds in the prepolymer is preferably coupled with the use of a light stabilizer or pigment as discussed below. Examples of unsaturated diisocyanates include, but are not limited to, substituted and isomeric mixtures including 2,2'-, 2,4'-, and 4,4'-diphenylmethane diisocyanate (MDI), 3,3'-dimethyl-4,4'-biphenyl diisocyanate (TODI), toluene diisocyanate (TDI), polymeric MDI, carbodimide-modified liquid 4,4'-diphenylmethane diisocyanate, para-phenylene diisocyanate (PPDI), meta-phenylene diisocyanate (MPDI), triphenylmethane-4,4'-, and triphenylmethane-4,4"-triisocyanate, napthylene-1,5,-diisocyanate, 2,4'-, 4,4'-, and 2,2-biphenyl diisocyanate, polyphenyl polymethylene polyisocyanate (PMDI), and mixtures thereof.

### Polyol Component

Any saturated polyol available to one of ordinary skill in the art is suitable for use in the polyurethane prepolymer. Exemplary polyols include, but are not limited to, polyether polyols, polycaprolactone polyols, polyester polyols, polycarbonate polyols, hydrocarbon polyols, and mixtures thereof. Polyester polyols tend to provide the polymer foam with higher tensile, tear and elongation, improved resistance to oils, solvents and oxidation. Polyether polyols tend to provide the polymer foam with lower cost, improved resistance to acids, bases and hydrolysis.

Suitable saturated polyether polyols for use in the present invention include, but are not limited to, polytetramethylene ether glycol (PTMEG); copolymer of polytetramethylene ether glycol and 2-methyl-1,4-butane diol (PTG-L); poly(oxyethylene)glycol; poly(oxypropylene)glycol; poly(ethylene oxide capped oxypropylene)glycol; and mixtures thereof.

Saturated polycaprolactone polyols include, but not limited to, diethylene glycol initiated polycaprolactone; propylene glycol initiated polycaprolactone; 1,4-butanediol initiated polycaprolactone; trimethylol propane initiated polycaprolactone; neopentyl glycol initiated polycaprolactone; 1,6-hexanediol initiated polycaprolactone; polytetramethylene ether glycol (PTMEG) initiated polycaprolactone; ethylene glycol initiated polycaprolactone; dipropylene glycol initiated polycaprolactone; and mixtures thereof.

Suitable saturated polyester polyols include, but not limited to, polyethylene adipate glycol; polyethylene propylene adipate glycol; polybutylene adipate glycol; polyethylene butylene adipate glycol; polyhexamethylene adipate glycol; polyhexamethylene butylene adipate glycol; and mixtures thereof. An example of a polycarbonate polyol that may be used with the present invention includes, but is not limited to, poly(hexamethylene carbonate) glycol.

Hydrocarbon polyols include, but not limited to, hydroxy-terminated liquid isoprene rubber (LIR), hydroxy-terminated polybutadiene polyol, saturated hydroxy-terminated hydrocarbon polyols, and mixtures thereof. Other aliphatic polyols that may be used to form the prepolymers include, but not limited to, glycerols; castor oil and its derivatives; Kraton polyols; acrylic polyols; acid functionalized polyols based on a carboxylic, sulfonic, or phosphoric acid group; dimer alcohols converted from the saturated dimerized fatty acid; and mixtures thereof.

When formed, polyurethane prepolymers may contain about 10 percent to about 20 percent by weight of the prepolymer of free isocyanate monomer. Thus, in one embodiment, the polyurethane prepolymer may be stripped of the free isocyanate monomer. For example, after stripping, the prepolymer may contain about 1 percent or less free isocyanate monomer. In another embodiment, the prepolymer contains about 0.5 percent by weight or less of free isocyanate monomer.

The polyurethane prepolymer may be formed with a single curing agent or a blend or mixture of curing agents. The curing agent is preferably modified with a freezing point depressing agent as discussed above.

### Curing Agents

Saturated curing agents for use with the present invention include, but are not limited to, hydroxy terminated curing agents, amine-terminated curing agents, and mixtures thereof. Depending on the type of curing agent used, the polyurethane composition may be thermoplastic or thermoset in nature. For example, polyurethanes prepolymers cured with a diol or secondary diamine with 1:1 stoichiometry are thermoplastic in nature. Thermoset polyurethanes, on the other hand, are generally produced from a prepolymer cured with a primary diamine or polyfunctional glycol.

In addition, the type of curing agent used determines whether the polyurethane composition is polyurethane-urethane or polyurethane-urea. For example, a polyurethane prepolymer cured with a hydroxy-terminated curing agent is polyurethane-urethane because any excess isocyanate groups will react with the hydroxyl groups of the curing agent to create more urethane linkages. In contrast, if an amine-terminated curing agent is used with the polyurethane prepolymer, the excess isocyanate groups will react with the amine groups of the amine-terminated curing agent to create urea linkages.

Suitable saturated hydroxy-terminated curing agents include, but are not limited to, ethylene glycol; diethylene glycol; polyethylene glycol; propylene glycol; 2-methyl-1,3-propanediol; 2-methyl-1,4-butanediol; dipropylene glycol; polypropylene glycol; 1,2-butanediol; 1,3-butanediol; 1,4-butanediol; 2,3-butanediol; 2,3-dimethyl-2,3-butanediol; trimethylolpropane; triisopropanolamine; diethylene glycol di-(aminopropyl)ether; 1,5-pentanediol; 1,6-hexanediol; glycerol; 1,3-bis-(2-hydroxyethoxy)cyclohexane; 1,4-cyclohexyldimethylol; 1,3-bis-[2-(2-hydroxyethoxy)ethoxy]cyclohexane; 1,3-bis-{2-[2-(2-hydroxyethoxy)ethoxy]ethoxy}cyclohexane; polytetramethylene ether glycol having molecular weight ranging from about 250 to about 3900; and mixtures thereof. In one embodiment, the hydroxy-terminated curing agent has a molecular weight of at least 50. In another embodiment, the molecular weight of the hydroxy-terminated curing agent is about 2000 or less. In yet another embodiment, the hydroxy-terminated curing agent has a molecular weight of about 250 to about 3900. It should be understood that molecular weight, as used herein, is the absolute weight average molecular weight and would be understood as such by one of ordinary skill in the art.

Suitable saturated amine-terminated curing agents include, but are not limited to, ethylene diamine; hexamethylene diamine; 1-methyl-2,6-cyclohexyl diamine; tetrahydroxypropylene ethylene diamine; 2,2,4- and 2,4,4-trimethyl-1,6-hexanediamine; 4,4'-bis-(sec-butylamino)-dicyclohexylmethane; 1,4-bis-(sec-butylamino)-cyclohexane; 1,2-bis-(sec-butylamino)-cyclohexane; derivatives of 4,4'-bis-(sec-butylamino)-dicyclohexylmethane; 4,4'-dicyclohexylmethane diamine; 1,4-cyclohexane-bis-(methylamine); 1,3-cyclohexane-bis-(methylamine); diethylene glycol di-(aminopropyl)ether; N,N,N',N'-tetrakis (2-hydroxypropyl)-ethylene diamine; 2-methylpentamethylene-diamine; diaminocyclohexane; diethylene triamine; triethylene tetramine; tetraethylene pentamine; propylene diamine; dipropylene triamine; 1,3-diaminopropane; dimethylamino propylamine; diethylamino propylamine; imido-bis-propylamine; monoethariolamine, diethanolamine; triethanolamine; monoisopropanolamine, diisopropanolamine; triisopropanolamine; isophoronediamine; and mixtures thereof. In one embodiment, the amine-curing agent has a molecular weight of about 64 or greater. In another embodiment, the molecular weight of the amine-curing agent is about 2000 or less.

### Blowing Agents

The forma can be formed by the addition of at least one physical or chemical blowing or foaming agent to the reaction mixture. The use of a foamed polymer allows for the adjustment of the density or mass distribution of the foam.

Blowing or foaming agents useful include, but are not limited to, organic blowing agents, such as azobisformamide; azobisisobutyronitrile; diazoaminobenzene; N,N-dimethyl-N,N-dinitroso terephthalamide; N,N-dinitrosopentamethylene-tetramine; benzenesulfonyl-hydrazide; benzene-1,3-disulfonyl hydrazide; diphenylsulfon-3-3, disulfonyl hydrazide; 4,4'-oxybis benzene sulfonyl hydrazide; p-toluene sulfonyl semicarbizide; barium azodicarboxylate; butylamine nitrile; nitroureas; trihydrazino triazine; phenyl-methyl-uranthan; p-sulfonhydrazide; peroxides; and inorganic blowing agents such as ammonium bicarbonate and sodium bicarbonate. A gas, such as air, nitrogen, carbon dioxide, etc., can also be forced or injected into the composition during the mixing or curing process.

Additionally, the foams can be formed by blending hollow or expandable microspheres with the composition, either during or before the molding process. Polymeric, ceramic, metal, and glass microspheres are useful in the invention, and may be solid or hollow and filled or unfilled. In particular, microspheres up to about 1000 micrometers in diameter are useful.

### UV, Gas Fade, and Light Stabilizers

The foams described herein can include at least one UV, gas fade, and/or light stabilizing component to prevent significant yellowing from unsaturated components contained therein. The use of a light stabilizer is preferred, for instance, for compositions having a difference in yellowness (*Y) of about 15 or greater, but also may be added to compositions having a difference in yellowness of from about 12 to about 15. As used herein, light stabilizer may be understood to include hindered amine light stabilizers, ultraviolet (UV) absorbers, and antioxidants.

Suitable light stabilizers include, but are not limited to, TINUVIN® 292, TINUVIN® 328, TINUVIN® 213, TINUVIN® 765, TINUVIN® 770 and TINUVIN® 622. TINUVIN® products are available from Ciba-Geigy. In one embodiment, the light stabilizer is UV absorber TINUVIN® 328, which is useful with aromatic compounds. In another embodiment, hindered amine light stabilizer TINUVIN® 765 is used with aromatic or aliphatic compounds. In addition, TINUVIN® 292 may also be used with the aromatic or aliphatic compositions.

As discussed above, dyes, as well as optical brighteners and fluorescent pigments can also be included in the foams. Such additional ingredients can be added in any amounts that will achieve their desired purpose.

As discussed, the compositions preferably include only saturated components because unsaturated components yellow over a period of time. While saturated compositions are resistant to discoloration, they are not immune to deterioration in their mechanical properties upon weathering. Addition of UV absorbers and light stabilizers to any of the above compositions may help to maintain the tensile strength, elongation, and color stability. The use of light stabilizing components also may assist in preventing cover surface fractures due to photo-degradation. Thus, suitable NV absorbers and light stabilizers, as listed above, may also be included in the compositions described herein.

### Fragrances

A fragrance or masking component can be added to the foams described herein. The fragrance component is preferably added in an amount of about 0.01 percent to about 1.5 percent by weight of the composition.

Suitable fragrance components include, but are not limited to, Long Lasting Fragance Mask #59672, Long Lasting Fragance Mask #46064, Long Lasting Fragance Mask #55248, Non-Descript Fragrance Mask #97779, Fresh and Clean Fragrance Mask #88177, and Garden Fresh Fragrance Mask #87473, all of which are manufactured by Flavor and Fragrance Specialties of Mahwah, N.J. Other non-limiting examples of fragrance components that may be added to the compositions include benzaldehyde, benzyl benzoate, benzyl propionate, benzyl salicylate, benzyl alcohol, cinnamic aldehydes, natural and essential oils derived from botanical sources, and mixtures thereof.

### Dispersants/surfactants

These additives can be added to keep any fillers and pigments wetted and well dispersed in the formulation, as well as providing other functional uses such as water absorbency. Examples include carboxylate, ethoxylate and sulfonate-based materials, e.g., Tamol® L, Tamol® 731 A, Morcryl ® (all from Rohm and Haas). Representative dispersants include a polyacrylic acid or its salt (e.g., sodium polyacrylate) or derivatives, such as PD9000, an anionic polyester surfactant (ICI Americas, Inc., Wilmington, DE) and Solsperse® 32000 (Avecia, Inc., Wilmington, DE).

### Dyes and Pigments

These additives provide coloring to the elastomeric foam. These include organic and inorganic pigments and dyes, examples of which include phthalocynanine blue, iron oxide, carbon black, indigo, and the like.

### Fire Retardants

There are number of fire-retardant materials that can be incorporated into the polymeric foam. For example, there are a variety of inorganic carbonates and oxides, including calcium carbonate, which form carbon dioxide or water when heated, that can act as fire retardants. If desired, organic fire-retardant materials, such as halogenated aromatics and the like, can be added.

### Anti-Microbials

Antimicrobial properties can be incorporated into the foam, for example, impregnating the foam with antimicrobial agents, such as antibiotics, quaternary ammonium compounds, silver ions, or iodine, that are gradually released into the surrounding solution over time and kill microorganisms (Medlin, J. (1997) Environ. Health Persp. 105, 290 292; Nohr, R. S. & Macdonald, G. J. (1994) J. Biomater. Sci., Polymer Edn. 5, 607 619 Shearer, A. E. H., et al (2000) Biotechnol. Bioeng. 67, 141 146.). One representative example of a suitable antimicrobial agent is Ultrafresh® DM-50 (Thompson Research).

### Chain Extenders

Chain extending agents include any material that is reactive with an isocyanate in the primary urethane material, and will polymerize in a head to tail arrangement with monomer units. When the functional group is hydroxy, the chain extension agent includes, but is not limited to, lactones and hydroxy carboxylic acids. Preferred lactones are epsilon-caprolactone and butyl lactone. A preferred carboxylic acid is 12-hydroxydodecanoic acid. The extending agent can also be an oxirane-functional material, such as alkylene oxides. Preferred oxirane functional materials include, but are not limited to, ethylene oxide and propylene oxide. Optionally, the extending agent is asymmetrical.

Additionally, a chain extending agent with at least difunctional reactivity with an isocyanate has at least two reactive groups that react with isocyanate groups, and which can be reacted with the other reaction materials. Preferably, there are 2 reactive groups per chain extension agent. Preferably, the reactive groups are hydroxyl, amine, thiol, and combinations thereof. More preferably, the reactive groups are hydroxyl. Optionally, the material can have a pendant alkyl chain. The pendant alkyl chain is the portion of the molecule that is opposite of the terminal reactive group and at a location beyond where the secondary reactive group attaches to the molecule. Also, the chain extension agent can contain heteroatoms, such as O, N, and Si. Optionally, the chain extension agent can be asymmetrical.

Examples of suitable chain extension agents, include, but are not limited to, C₂₋₁₀ diols such as butanediol, 2-ethyl-1,3 hexanediol, 2-methyl-2,4-pentane diol, 2,2,4-trimethyl-1,3-pentanediol, 2,4-diethyl-1,5-octanediol, 1-hydroxymethyl cyclohexan-4-ol, 1-amino-hexan-6-ol, 2-ethyl-3-N-methyl-1,3-hexanediamine, isomers of these materials, and mixtures thereof. Examples of the chain extension agent with at least two functional groups that have the same reactivity with respect to each other include, but are not limited to, 1,6-hexane diol and 1,10-decane diol. Examples of asymmetrical chain extension agents include 2-methyl-1,6-hexane diol and 3-methyl-1,10-decane diol.

As used herein, the C₂₋₁₀ diol, such as butane diol, is used a curing agent when no additional resin / polyol is present, and when there is resin / polyol in addition to that found in the prepolymer, the C₂₋₁₀ diol is typically referred to as a chain extender.

In some embodiments, a chain extending agent is required to provide the foam with desirable physical properties, and in other embodiments, the chain extending agent is not required. That is, by simply eliminating the chain extender, the process described herein produces very soft closed cell foams (i.e., significantly softer than other conventional closed cell foams).

### Cross Linking Agents

The presence of polyols (i.e., molecules which include more than two hydroxyl groups) and/or polyisocyanates (i.e., molecules which include more than two isocyanate groups) can help to cross-link the polymeric material. Glycerine is an example of a suitable cross-linker. Other examples include ethylene glycol, propylene glycol, pentaerythritol, and the like.

Cross-linking can be achieved using chemical agents that produce free radicals and by using multifunctional monomers. (see, for example, Szycher's Handbook of Polyurethanes, CRC Press, LLC, Copyright 1999).

### II. Process for Preparing the Foams

The process for producing the foams involves first blending a chemical blowing agent, such as azodicarbonamide, activators, and dispersants, with polyester resin. This material is then mixed, for example, in a high shear mechanical mixer, with a diol or polyol, such as butanediol, an amine catalyst and an MDI prepolymer.

Ideally, the reacting material is then continuously dispensed onto a moving conveyor. The speed of the conveyor and the rate at which the materials are being dispensed can be carefully controlled and monitored throughout the process to provide optimal results. That is, the speed of the conveyor and the rate at which the material is dispensed determines the thickness of the elastomer. Thinner materials require less heat and/or dwell time for preheating and blowing agent activation. Thicker materials require more heat and/or dwell. Thickness variation, for example, of more than about 25%, within a given area can cause significant variation in the final physical properties.

Shortly after the material is dispensed the mixture polymerizes and forms a relatively soft polyurethane elastomer. The material is then heated, for example, in a multi-zoned conveyorized expansion oven. Ideally, there are several temperature zones in the oven. The temperature settings in the initial zones are selected to preheat and soften the elastomer, and typically range from about 100 to about 150°C, although these ranges can vary depending on the type of elastomer and blowing agent. Ideally, the entire cross section of the elastomer is heated to an even temperature below, and, more ideally, just below, the degradation /activation temperature of the chemical blowing agent, in one embodiment, azodicarbonamide.

Beyond this point, the temperature in various zones of the oven is then ramped up to between about 160 and about 180°C to initiate gradual degradation of the blowing agent, if a chemical blowing agent is used. Gas is generated as a result of the degradation of the blowing agent (nitrogen is the gas in the case of azodicarbonamide) and is the mechanism for expansion of the elastomer to form a foam. The thus-formed elastomeric foam then exits the conveyorized oven and continues through a series of cooling conveyors. If a physical blowing agent is used, it can also be forced or injected into the composition during the mixing or curing process.

### III. Articles of Manufacture Using the Foams

The foam can be used in various applications, for example, in wet suits, diving suits and orthotic brace materials. The closed cell polyurethane foam can be skived into thin rolls (typically 2-3mm thick) and laminated to fabrics (lycra, spandex, light weight nylons and polyesters, and the like). The resulting laminate can then be cut, sewn and finished into a final form. The choice of reactants and/or reaction conditions can easily be modified to generate closed cell foams suitable for a variety of other applications and industries, including automotive, footwear, printing, medical, apparel, and other applications.

An additional application is the use of the foam as a "spring" for reflectors on paved roads. In this application, a softer foam is preferred, with a relatively larger cell structure than for other applications. For example, a suitable softness is on the order of between about 3447.4 and 13789.5 Pa (about 0.5 and 2.0 psi) CD. The density is typically between about 96.1 and about 128.1 kg/m³ (about 6 and about 8 lbs/ft³), and the compression set is typically <20%, preferably <15%.

Another additional application is in die ejection materials. In this application, the materials tend to have a relatively higher density. The foams tend to be firm, with a compression/deflection ("CD") of between about 55158.0 and about 103421.4 Pa (about 8 and about 15 psi). They also have a relatively high density, between about 160.2 and about 320.4 kg/m³ (about 10 and about 20 lbs/ft³), and a relatively low compression set (<10%, preferably <5%).

Another additional application is in foam seals, such as those used in refrigerator units. In this application, the materials tend to have a medium hardness, typically in the range of between about 34473.8 and about 68947.6 Pa (about 5 and about 10 psi) CD. They also tend to have a medium density, between about 128.1 and about 192.2 kg/m³ (about 8 and about 12 lbs/ft³), and a relatively low compression set (<15%).

The desired applications for the foam will depend, in part, on the properties of the foam itself. Using the processes described herein, one can produce a foam with a density in the range of between about 48.0-480.6 kg/m³ (about 3-30 lb/ft³), in one embodiment, between about 98.1 to about 192.2 kg/m³ (about 6 to about 12 lb/ft³), and in another embodiment, between about 128.1 to about 160.2 kg/m³ (about 8 to about 10 lb/ft³). The foam can have a hardness of between about 3447.4 and about 689475.7 Pa (about 0.5 and about 100 psi), in one embodiment, between about 6894.8 and about 48263.3 Pa (about 1 and about 7 psi), and in another embodiment, between about 20684.3 and about 34473.8 Pa (about 3 and about 5 psi). The pore size of the resulting foam can be anywhere from about 10 pores per 25.4 cm (pores per inch, ppi) on up, and in one embodiment, is around 50 ppi or more, and in another embodiment, is around 70 ppi or more.

The present invention will be better understood with reference to the following non-limiting example.

### Example 1. Preparation of an elastomeric foam suitable for use in preparing wet suits and/or orthotics (orthopedic soft goods).

The purpose for this example was to prepare an elastomeric foam with properties suitable for wet suits and/or orthotics. There are several desired physical characteristics for these materials. One of the characteristics is softness (compression deflection @ 25% (ASTM D1056) values in the range of about 6894.8 to about 48263.3 Pa (about 1 to about 7 psi), preferably in the 20684.3 to 34473.8 Pa (3 to 5 psi) range. Another is low to medium density, i.e., a density in the range of from about 96.1 to about 192.2 kg/m³ (about 6 to about 12 lb/ft³), preferably in the range of from about 128.1 to about 160.2 kg/m³ (about 8 to about 10 lb/ft³). Additional desired properties include low compression set, i.e., less than 15% (ASTM D1056), preferably less than 10%, high elongation, i.e., greater than 250% (ASTM D412), preferably greater than 350%. The material should be elastic, i.e., it can be stretched repeatedly to 150% or more of the initial length and will return rapidly and with force to the approximate original length, and should have a fine cell structure, i.e., greater than 50 ppi (pores per 25.4 cm (inch)), and preferably greater than 70 ppi. The material should have relatively low water absorption, i.e., less than 6% (ASTM D1056), preferably less than 4%, and high resilience, i.e., greater than 35% (ASTM D2632), preferably greater than 40%.

The following formulation was used to prepare the elastomeric foam:

### Formulation:

| | | |
|---|---|---|
| Ester Resin | Inolex 1931-50 | 100.000 phr |
| - Polyester Polyol, Adipic Acid/Diethylene Glycol/Glycerine Crosspolymer | | |
| Blowing Agent | Ritchem AC1000 | 7.500 phr |
| - Azodicarbonamide, Diazenedicarboxamide | | |
| Activator - | Ritchem Cellex A | 0.375 phr |
| - surface treated urea | | |
| MDI Prepolymer | Huntsman Suprasec 2543 | 50.400 phr |
| - modified 4,4' -diphenylmethane-diisocyanate | | |
| Chain Extender | BASF 1.4 Butanediol | 6.250 phr |
| -1,4 - Butylene Glycol | | |
| Catalyst | GE/OSI NIAX* A-537 | 0.10% |
| - Delayed Action Amine Catalyst (GE Silicones) | | |
| Dye | Milliken Black 454SS or Black X-77 | 1.00% |
| - Nonionic polymeric colorant blend (Milliken Chemicals, Spartanburg, SC) | | |

The material was blended and passed through an oven with a series of zones, each zone having its own temperature and its own length. The material was passed through each zone at a predefined speed, to provide a predetermined dwell time at the particular temperature. The zones, temperatures, length of the zones, speed at which the material passed through the zones, and the dwell times, are provided below in Table 1.

**Table 1: Oven Settings**

| **Zone** | **Temp, °C** | **length, m** | **m/min** | **dwell, min.** |
|---|---|---|---|---|
| 1b | 154.4 (310 °F) | 9.14 (30 ft) | 0.91 (3.00 Ft/min) | 10.0 |
| 2a | 154.4 (310 °F) | 9.14 (30 ft) | 0.91 (3.00 Ft/min) | 10.0 |
| 2b | 154.4 (310 °F) | 4.57 (15 ft) | 0.96 (3.15 Ft/min) | 4.8 |
| 3 | 157.2 (315 °F) | 4.57 (15 ft) | 0.99 (3.25 Ft/min) | 4.6 |
| 4 | 157.2 (315 °F) | 4.57 (15 ft) | 1.00 (3.30 Ft/min) | 4.5 |
| 5 | 160 (320 °F) | 4.57 (15 ft) | 1.00 (3.30 Ft/min) | 4.5 |
| 6 | 160 (320 °F) | 4.57 (15 ft) | 1.00 (3.30 Ft/min) | 4.5 |
| 7 | 165.5 (330 °F) | 4.57 (15 ft) | 1.00 (3.30 Ft/min) | 4.5 |
| 8 | 165.5 (330 °F) | 4.57 (15 ft) | 1.32 (4.35 Ft/min) | 3.4 |
| 9 | 171.1 (340 °F) | 4.57 (15 ft) | 1.52 (5.00 Ft/min) | 3.0 |
| 10 | 171.1 (340 °F) | 4.57 (15 ft) | 1.67 (5.50 Ft/min) | 2.7 |
| 11 | 171.1 (340 °F) | 4.57 (15 ft) | 1.64 (5.40 Ft/min) | 2.8 |
| 12 | 171.1 (340 °F) | 4.57 (15 ft) | 1.75 (5.75 Ft/min) | 2.6 |

A relatively higher density material was generated by running the above formulation at higher conveyor speeds (i.e., with a reduced dwell time).

To prepare a relatively soft material, for example, with a softness on the order of between about 3447.4 and 1379.5 Pa (about 0.5 and 2.0 psi) CD, the following formulation was used:

| | |
|---|---|
| Lexorez 1931-50 | 100phr |
| - Polyglycol Adipate available from Inolex Ritchem AC1000 | 5 |
| - The blowing agent azodicarbonamide (Ritchem) BYK 185 | 1 |
| - A wetting and dispersing additive (BYK Chemie) Suprasec 2543 | 25.7 |
| Dabco 33LV | 0.10 |
| - A tertiary amine catalyst (33% triethylenediamine in dipropylene glycol, sold by Air Products) | |
| Milliken Black 454SS or Black X-77 | 0.15 |
| - Milliken Chemicals, Inc., Spartanburg, SC | |

## Claims

1. A process for preparing a urethane elastomer closed cell foam, comprising:
a) blending a diisocyanate or a polyisocyanate, a polyester and/or polyether polyol, an amine catalyst, and a chemical blowing agent,
b) curing the components to form a polymer,
c) heating the polymer to a temperature above the softening temperature of the polymer and below the activating temperature for the chemical blowing agent to soften the polymer, and
d) heating the softened polymer to a temperature sufficient to activate the blowing agent, to form a polymer foam.

2. The process of Claim 1, wherein the components further comprise a C₂₋₁₀ diol.

3. The process of Claim 2, wherein the C₂₋₁₀ diol is butanediol.

4. The process of Claim 1, wherein the polyisocyanate is selected from diphenylmethane diisocyanate (MDI) and/or toluene diisocyanate (TDI) prepolymers.

5. The process of Claim 1, wherein the blowing agent is azodicarbonamide.

6. The process of Claim 1, wherein the density of the foam is between about 0,048 g/cm³ (3 lb/ft³) and about 0,48 g/cm³ (30 lb/ft³) or between about 0,096 g/cm³ (6 lb/ft³) and about 0,192 g/cm³ (12 lb/ft³) or between about 0,128 g/cm³ (8 lb/ft³) and about 0,16 g/cm³ (10 lb/ft³).

7. The process of Claim 1, wherein the foam has greater than 10 pores per 2,54 cm (10 ppi/ pores per inch) or greater than 50 pores per 2,54 cm (50 ppi/ pores per inch) or greater than 70 pores per 2,54 cm (70 ppi/ pores per inch).

8. An article of manufacture comprising the closed cell foam of any of Claims 1 to 7.

9. The article of manufacture of Claim 8, wherein the article of manufacture is selected from the group consisting of diving suits, orthotic brace materials, fabrics laminated with thin layers of the foam, gaskets, seals, tubes, gloves, belts, die cuttings, extrusions, sheets, bearings, die ejection materials, and foam bases for road reflectors.

## Patentansprüche

1. Verfahren zur Herstellung eines geschlossenzelligen Urethanelastomerschaums, das umfasst:
a) Mischen eines Diisocyanats oder eines Polyisocyanats, eines Polyesters und/oder eines Polyetherpolyols, eines Aminkatalysators und eines chemischen Treibmittels,
b) Härten der Komponenten unter Bildung eines Polymers,
c) Erhitzen des Polymers auf eine Temperatur über der Erweichungstemperatur des Polymers und unter der Aktivierungstemperatur für das chemische Treibmittel, um das Polymer zu erweichen, und
d) Erhitzen des erweichten Polymers auf eine Temperatur, die ausreicht, um das Treibmittel zu aktivieren, um einen Polymerschaum zu bilden.

2. Verfahren nach Anspruch 1, wobei die Komponenten ferner ein C₂₋₁₀-Diol umfassen.

3. Verfahren nach Anspruch 2, wobei das C₂₋₁₀-Diol Butandiol ist.

4. Verfahren nach Anspruch 1, wobei das Polyisocyanat aus Diphenylmethandiisocyanat- (MDI) und/oder Toluoldiisocyanat- (TDI) Präpolymeren ausgewählt ist.

5. Verfahren nach Anspruch 1, wobei das Treibmittel Azodicarbonamid ist.

6. Verfahren nach Anspruch 1, wobei die Dichte des Schaums zwischen etwa 0,048 g/cm³ (3 lb/ft³) und etwa 0,48 g/cm³ (30 lb/ft³) oder zwischen etwa 0,096 g/cm³ (6 lb/ft³) und etwa 0,192 g/cm³ (12 lb/ft³) oder zwischen etwa 0,128 g/cm³ (8 lb/ft³) und etwa 0,16 g/cm³ (10 lb/ft³) liegt.

7. Verfahren nach Anspruch 1, wobei der Schaum mehr als 10 Poren pro 2,54 cm (10 ppi/Poren pro Zoll) oder mehr als 50 Poren pro 2,54 cm (50 ppi/Poren pro Zoll) oder mehr als 70 Poren pro 2,54 cm (70 ppi/Poren pro Zoll) aufweist.

8. Herstellungsgegenstand mit dem geschlossenzelligen Schaum nach einem der Ansprüche 1 bis 7.

9. Herstellungsgegenstand nach Anspruch 8, wobei der Herstellungsgegenstand aus der Gruppe ausgewählt ist, die aus Tauchanzügen, Orthesenstützmaterialien, Geweben, die mit dünnen Schichten des Schaums laminiert sind, Dichtungsringen, Dichtungen, Rohren, Handschuhen, Gürteln, Stanzlingen, Extrusionen, Platten, Lagern, Formauswurfmaterialien und Schaumbasen für Straßenreflektoren besteht.

## Revendications

1. Procédé, destiné à préparer une mousse à alvéoles fermées en élastomère d'uréthane, comprenant les opérations, consistant à:
a) mélanger un diisocyanate ou un polyisocyanate, un polyester et / ou un polyol de polyéther, un catalyseur aminé et un agent d'expansion chimique,
b) traiter les composants pour former un polymère,
c) chauffer le polymère à une température au-dessus de la température de ramollissement du polymère et au-dessous de la température d'activation de l'agent d'expansion chimique, pour ramollir le polymère et
d) chauffer le polymère ramolli à une température suffisante pour activer l'agent d'expansion, pour former une mousse polymère.

2. Procédé selon la revendication 1, dans lequel les composants comprennent, en outre, un C₂₋₁₀ diol.

3. Procédé selon la revendication 2, dans lequel le C₂₋₁₀ diol est du butanediol.

4. Procédé selon la revendication 1, dans lequel le polyisocyanate est sélectionné dans le groupe se composant de prépolymères de diisocyanate de diphénylméthane (MDI) et / ou de diisocyanate de toluène (TDI).

5. Procédé selon la revendication 1, dans lequel l'agent d'expansion est de l'azodicarbonamide.

6. Procédé selon la revendication 1, dans lequel la densité de la mousse est située entre environ 0,048 g/cm³ (3 lb/ft³) et environ 0,48 g/cm³ (30 lb/ft³) ou entre environ 0,096 g/cm³ (6 lb/ft³) et environ 0,192 g/cm³ (12 lb/ft³) ou entre environ 0,128 g/cm³ (8 lb/ft³) et environ 0,16 g/cm³ (10 lb/ft³).

7. Procédé selon la revendication 1, dans lequel la mousse a plus de 10 pores par 2,54 cm (10 ppi/pores par pouce) ou plus de 50 pores par 2,54 cm (50 ppi/pores par pouce) ou plus de 70 mores par 2,54 cm (70 ppi/pores par pouce).

8. Article manufacturé, comprenant la mousse à alvéoles fermées selon l'une quelconque des revendications 1 à 7.

9. Article manufacturé selon la revendication 8, dans lequel l'article manufacturé est sélectionné dans le groupe, se composant de vêtements de plongée, de matériaux pour appareils orthétiques, de tissus, laminés avec de fines couches de la mousse, de garnitures, de joints d'étanchéité, de tubes, de gants, de courroies, de découpages à l'emporte-pièce, d'extrusions, de feuilles, de paliers, de matériaux d'éjection de moule et de bases de mousse pour réflecteurs de route.
